# EUROPEAN PATENT APPLICATION

(11) **EP 4 083 799 A1**
(43) Date of publication of application: **02.11.2022**
(21) Application number: 21171440.7
(22) Date of filing: 30.04.2021
(51) Int. Cl.: G06F 9/50, G06F 9/54, G06Q 10/06

(54) **CONTINUOUS FLOW ENGINE DATA STREAMS AND BATTERY-BASED POW-ER STORAGE FACILITIES DATA STREAMS PROCESSING METHOD AND DEVICE**

(71) Applicant: Siemens Energy Global GmbH & Co. KG, 81739 München (DE)
(72) Inventor: Gottschalk, Ralph, 07366 Pottiga (DE); Schuh, Martina, 91086 Aurachtal (DE)

(57) **Abstract**

The present invention refers to a new method to collect and process data streams and notifications of continuous flow engine and battery-based power storage facilities. Herein, the processing of said data is significantly improved compensating the significantly increased amount of data acquired for modern continuous flow engines as well as the huge amount of data required to monitor a battery-based power storage facility. This allows to, for example, more dynamically process the data and take care of problems in an early stage. Furthermore, the present invention refers to a data management device and system being adapted to realize the inventive method. Additionally, the present invention refers to a computer program product to execute the inventive method utilizing a computing entity.

## Description

The present method refers to a method to collect and process data streams and notifications of at least one continuous flow engine and/or data streams of a battery-based power storage facility. Furthermore, the present invention refers to a data management device adapted to execute the inventive method. Additionally, the present invention refers to a system containing an inventive data management device and a data storage to support storing the required data. Furthermore, the present invention refers to a computer program product including instructions to cause a computing entity to execute the inventive method.

Past decades showed tremendous changes on the possibilities in the context of continuous flow engines and the insight in this context. Especially, the past years showed how far the data acquisition can be improved and what can be achieved using this additional data. Despite the great changes and new opportunities this seems to be far from reaching its limit and even further improvements are expected in the near future.

However, these developments are not only beneficial, but also necessary. The continuous flow engines represent the backbone of modern industrial applications. For example, the use of renewable energies would not be possible without continuous flow engines like gas turbines compensating the resulting fluctuations. Only this way the stable electric grid can be maintained. This further and further increasing relying on these systems, however, also come along an increased strain requiring the additional insight to make better use of the continuous flow engines and render their use more beneficial taking into account the increased wear out and strain requiring additional service and maintenance actions.

Handling this data, however, is already quite a problem and not all what could be achieved can be achieved based on the limitations of processing the data. Leaving alone current development resulting in further increased amounts of data to be handled and to be efficiently utilized to take care of the further increasing demands these units will be confronted with.

Similar problems are observed for battery-based power storage facilities consisting of a plurality of connected batteries utilized to flexibly store electric power. Corresponding facilities suffer from multiple batteries being required to be coupled to provide the demanded voltage and the like. However, minor defect in a single battery results in the whole coupled branch of batteries being required to be shut down. Monitoring such battery-based power storage facility, however, is a major challenge to be solved as the flood of data to be monitored requires a highly sophisticated and extensive server system rendering the benefit obtained by such facility quite low. Also, such facility requires an improved possibility to handle the data available and make good use of it to avoid significant losses while keeping the monitoring effort at bay.

This and further problems are solved by the products and methods as disclosed hereafter and in the claims. Further beneficial embodiments are disclosed in the dependent claims and the further description and figures. These benefits can be used to adapt the corresponding solution to specific needs or to solve additional problems.

According to one aspect the present invention refers to a method of collecting and processing data streams and notifications of at least one continuous flow engine and/or data streams and notifications of a battery-based power storage facility utilizing a task division process and a task assigning process utilizing at least one processing unit, wherein the data streams contain continuous data related to the at least one continuous flow engine or the battery-based power storage facility like sensor data or performance data,
wherein the notifications contain event dependent data like alerts and state related data,
wherein the task division process creates jobs regarding the generation of data containers to provide data packages of the data streams and jobs regarding the creation of message containers to provide data packages of the notifications, wherein the jobs are stored as queue,
wherein the task assignment process assigns the jobs of the queue to available processing units to provide the data containers and message containers.

It was noted that the present invention can be especially beneficially utilized in the context of continuous flow engines. According to a further aspect the present invention refers to a method of collecting and processing data streams and notifications of at least one continuous flow engine utilizing a task division process and a task assigning process utilizing at least one processing unit,
wherein the data streams contain continuous data related to the at least one continuous flow engine like sensor data or performance data,
wherein the notifications contain event dependent data like alerts and state related data,
wherein the task division process creates jobs regarding the generation of data containers to provide data packages of the data streams and jobs regarding the creation of message containers to provide data packages of the notifications, wherein the jobs are stored as queue,
wherein the task assignment process assigns the jobs of the queue to available processing units to provide the data containers and message containers.

The phrases "data stream of at least one continuous flow engine" and "notifications of at least one continuous flow engine" naturally do not only refer to data streams and notifications generated by the continuous flow engine itself. The person skilled in the art understands such phrase to refer to data streams related to such continuous flow engine. Herein, the auxiliaries required to utilize such continuous flow engine are also providing data streams like the temperature of the fuel, the burning and boiling processes in a boiler providing steam for a steam turbine, the temperature of the air in the air inlet of a gas turbine, the oil pressure of hydraulic components controlling various elements required for the utilization of such continuous flow engine, the composition of a fluid to be compressed by a compressor, and the like.

This allows to significantly streamline the creation of corresponding data containers and message containers. Furthermore, it allows to more closely review and control the processes and allow to increase the safety of processing high priority jobs.

According to a further aspect the present invention refers to a data management device containing a processing unit and at least one data storage, wherein the data management device is adapted to be utilized in an inventive method,
wherein the division processing unit is adapted to execute the task division process,
wherein the data storage is adapted to store a communication protocol.

According to a further aspect the present invention refers to a system containing an inventive data management device and a queue data storage,
wherein the queue data storage is a data storage adapted to store the queue and
wherein the queue data storage is adapted to provide the jobs of the queue to a task assignment process.

According to further aspect the present invention refers to a computer program product, tangibly embodied in a machine-readable storage medium, including instructions operable to cause a computing entity to execute an inventive method.

To simplify understanding of the present invention it is referred to the detailed description hereafter and the figures attached as well as their description. Herein, the figures are to be understood being not limiting the scope of the present invention, but disclosing preferred embodiments explaining the invention further.

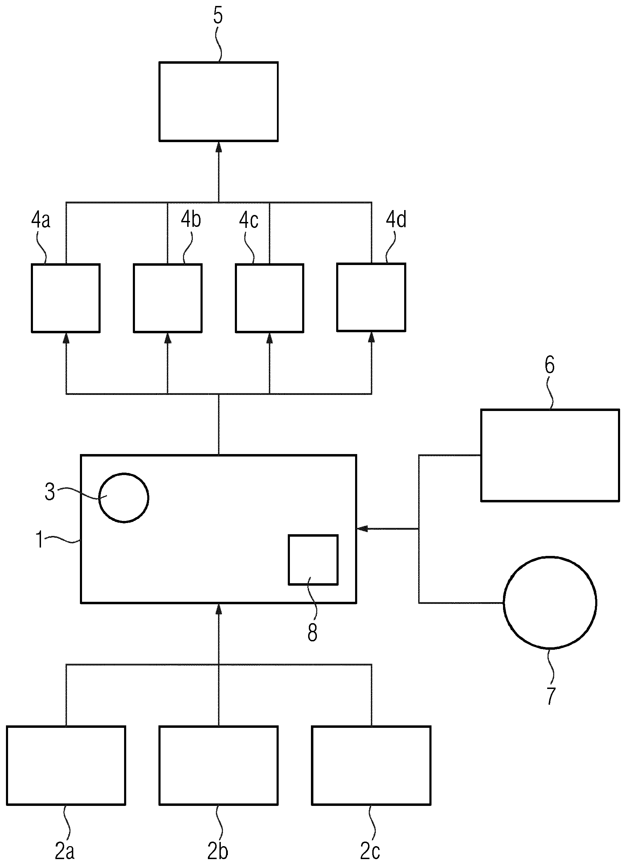

Fig. 1 shows a scheme of an inventive method, wherein the data of multiple continuous flow engines is processed by a data management device to process it high efficiently and render it available for further analysis.

Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long-term data storage like hard drives or data storage units like CDs, DVDs, USB sticks and the like. Such data storage can additionally include or be connected to a processing unit to allow a processing of the data stored on the data storage.

Continuous flow engines are characterized by a continuous stream flowing through said engine. For example, such continuous flow engine utilizes a stream of fluid flowing through the engine to rotate a rotor that in turn converts the kinetic energy into electricity. Such fluid stream can be generated by means of burning a fuel using burner in a gas turbine or boiling a liquid like water in a steam generator. Examples of corresponding continuous flow engines are gas turbines and steam turbines. Alternatively, such continuous flow engine utilizes energy to move a fluid in said continuous flow engine like in a compressor. Herein, such compressor is often associated to a fridge being an application of the daily life. However, compressors are also utilized in industrial applications like in the chemical industry to continuously compress a fluid like in a cracking process to allow a further processing.

It was noted that such continuous flow engines benefit significantly from the inventive method. It is assumed that the specific data created in such engines is especially suitable to be processed herewith. Supposedly, the amount of data collected for such engines, the data typically collected, the behavior of these engines and correlated created data, as well as many other factors result in the surprisingly high benefit obtained when applying the inventive method in this context.

A battery-based power storage facility contains a plurality of battery arrangement consisting of connected batteries to provide the required output. Such battery-based power storage facilities can be utilized to compensate for a lack of power resulting, for example, from fluctuations during the power generation utilized renewable energy. Herein, a significant number of, for example, lithium batteries is to be coupled to provide the required output. While such system is flexible and a very good addition to supporting the renewable energies with high-speed adaptable power generation units like gas turbines the battery-based power storage facility suffers from the required processing of data to monitor such facility and its batteries.

According to one aspect the present invention refers to a method as described above.

According to further embodiments it is preferred that the task division process utilizes an http/2 based communication protocol to communicate with a processing unit executing the creation of the data containers and/or message containers. It was noted that such protocol is very suitable to communicate. Especially, to, for example, send required commands, requests and to forward data.

For example, such communication protocol can be gRPC. gRPC is very beneficial for typical applications to realize the inventive method. It was noted that such API in combination with the specified data sources provides high performance. Furthermore, such API enables to allow an easy access by means of a different computer simply by opening a port as required. Additionally, it was noted that such API is able to run using almost any operating system.

According to further embodiments it is preferred that the jobs referring to notifications contain a priority indicator, wherein the priority indicator is selected based on the relevance of the notification, wherein the priority indicator influences the placement of the job in the queue. This allows to, for example, differentiate between less relevant notifications to be stored and/or forwarded like elements being switched on or off being of lower importance from high important notifications requiring immediate action. For example, such action might even result in an active execution of a job to be stopped and being replaced by the high important notification related job.

According to further embodiments it is preferred that the data streams contain rotating speed, performance or temperature data related to the continuous flow engine.

According to further embodiments it is preferred that the continuous flow engine is a compressor, a gas turbine, a steam turbine, or a combined cycle power device, more preferred a gas turbine, a steam turbine, or a combined cycle power device, even more preferred a gas turbine. Such combined cycle power device contains a gas turbine and a steam turbine being coupled to significantly increase the overall efficiency of the power generation.

According to further embodiments it is preferred that the task division process creates specific data containers and/or message containers in case a specific event is triggered or a specific request is received. For example, such specific event can be an alarm triggering an alarm related creation of at least one corresponding data container and a message container. Also, it is possible to manually request the creation of a required data container utilizing a user interface. Herein, depending on the reason the corresponding data containers and message containers can be created in addition to some predefined data containers and message containers. Alternatively, the scheduled data containers, for example, are split up to immediately provide a data container and the subsequent data stream is stored in a new data container.

According to further embodiments it is preferred that the number of processing units assigned to the jobs is adapted based on the situation. For example, the number can be increased or decreased based on the overall situation. In case urgent processing of the data streams is required based on, for example, alerts the number of processing units assigned to process the jobs is increased by activating reserve processing units and/or reassign running processing from different tasks to such process. In this context, it has to be noted that a significant number of additional processing units is typically available being utilized to run additional modules and/or third-party software that can be automatically reassigned by the data management device.

According to further embodiments it is preferred that the data management device is adapted to reassign processing unit not processing the jobs from different tasks to processing the job. It was noted that this can be even done completely automatically to make best use of the available processing power in such industrial plant.

According to further embodiments it is preferred that the task assignment process defines at least one processing unit being available for immediate data container and/or message container creation, more preferred message container creation. Herein, such processing unit can be, for example, defined as reserved processing unit being always available for required calculation. To further increase the efficiency it is typically, however, preferred that at least one processing unit is assigned with low priority and/or short actions. Such low priority actions are not problematic to be restarted. Such short actions are only requiring a short processing time like the creation of most message containers. This allows to have always at least one processing unit available on short notice while still utilizing all processing units with a high efficiency. Naturally, the overall efficiency is lower than always keeping each processing unit occupied. However, it was surprisingly noted that for real applications the requirement to process urgent cases easily outweighs the loss of efficiency. Simply stopping available processes to have a processing unit available on the other hand is surprisingly also less efficient in real cases as typically long-term processes have to be stopped and typically be started anew rendering a significant amount of spent processing power useless.

According to a further aspect the present invention refers to a data management device containing a processing unit and at least one data storage, wherein the data management device is adapted to be utilized in an inventive method, wherein the division processing unit is adapted to execute the task division process, wherein the data storage is adapted to store a communication protocol.

According to further embodiments it is preferred that the data management device contains an assignment processing unit, wherein the dispatcher processing unit is adapted to execute the task assignment process.

According to further embodiments it is preferred that the data management device is adapted to change the currently assigned tasks of processing units not running jobs. It was noted that the high efficiency provided by the inventive data management device allows to make best use of such processing units allowing to, for example, avoid otherwise required upgrades and/or increasing the overall reliability of monitoring processes and the assessment of corresponding monitoring data.

According to further embodiments it is preferred that the data management is adapted to be introduced into an existing IT infrastructure of an industrial plant, wherein the data management device is adapted to automatically control the assignment of processes running on existing processing units of the IT infrastructure.

According to further embodiments it is preferred that the data management is adapted to run independent of a specific operating system. Based on the low-level connection of the processes of the data management device directly addressing the processes running on the processing units it becomes possible to easily execute the inventive method utilizing the inventive data management device with virtually any operating system available. Herein, Windows operating systems, linux systems or operating systems for microcomputers like raspberry are easily utilized without requiring significant adaptions or adaptions at all. The broad applicability renders the inventive data management devices being highly flexible means to optimize such systems.

According to further embodiments it is preferred that the data storage stores a http/2 based communication protocol.

According to a further aspect the present invention refers to a system containing an inventive data management device and a queue data storage, wherein the queue data storage is a data storage adapted to store the queue, and wherein the queue data storage is adapted to provide the jobs of the queue to a task assignment process.

According to further embodiments it is preferred that system contains a queue processing unit, wherein the queue processing unit is a processing unit adapted to review the jobs of the queue and adapt the order of the queue. For example, such adapting of the queue can be based on priority indicators associated to or contained in the jobs. For example, such processing unit might continuously scan the queue for corresponding indicators and place the jobs in a corresponding order to faster and easier assign the high priority jobs as soon as possible.

According to further embodiments it is preferred that system contains a plurality of computing units, wherein such computing unit contains at least one processing unit adapted to be utilized to execute a job. Typically, such plurality refers to at least 15, more preferred at least 25, even more preferred at least 50, computing units. It was noted that utilizing the inventive data management device allows to easily bundle such processing power and utilize it to address such tasks. This surprisingly allows to not only very easily upgrade such industrial plant. It also allows to significantly improve the reliability and maintenance options. Especially, for power generation stopping such monitoring processing for repairs is a huge challenge. However, the distributed processing allows to easily replace damaged computing units, wherein the data management device automatically reassigns corresponding tasks to the remaining computing units.

According to a further aspect the present invention refers to a computer program product, tangibly embodied in a machine-readable storage medium, including instructions operable to cause a computing entity to execute an inventive method.

The following detailed description of the figure uses the figure to discuss illustrative embodiments, which are not to be construed as restrictive, along with the features and further advantages thereof.

Figure 1 shows a scheme of an inventive method, wherein the data of multiple continuous flow engines is processed by a data management device to process it high efficiently and render it available for further analysis. Herein, the sensors 2a, 2b, 2c generate data streams and notifications regarding the status of a gas turbine as example of a continuous flow engine. Not shown in figure 1 is data regarding the performance of the gas turbine based on, for example, the output of said gas turbine also being forwarded to the data managing device 1. This data is transferred to a data management device 1 that further processes the data. In this context, the data streams are processed by a task division and task assigning process executed by the data managing device 1.

The data also contains notifications like alerts and state reports being send to the data managing unit 1. These notifications provide no homogeneous data stream, but singular data sets indicating important information bits to be stored and/or forwarded.

The task division process executed by the data managing unit 1 creates jobs to create data containers for the data streams as well as message containers for the notifications. These jobs are stored in a queue to be processed. Said queue is stored on a data storage 3 being located in the data management device. Herein, the task division process utilizes an http/2 based communication protocol to communicate with a processing unit executing the creation of the data containers and/or message containers.

The jobs referring to notifications further contain a priority indicator. wherein the priority indicator is selected based on the relevance of the notification. Said priority indicator influences the placement of the job in the queue. High priority indicators result in a front placement of the corresponding job. For example, alerts are typically preferred to be accompanied with a high priority indicator rendering their processing significantly faster. Generic status information like normal state changes indicating the normal process on the other hand can be provided with a low priority indicator resulting in their placement being at the end of the queue based on the lower interest and typically less importance to get these notifications being processed swiftly.

The task division process herein not only creates the jobs based on some routine or schedule. Furthermore, the task division process creates specific data containers or message containers in case a specific event is triggered or a specific request is received. For example, in case a certain alert as examples of an event 7 is triggered a data container of a specified earlier time is created. Furthermore, such out of order job creation can be triggered by a user utilizing the user interface 6. Herein, such special data container is created either additionally to the normal data containers or the other data containers are cut accordingly to provide such specified data container containing relevant data regarding the specific alert. The data streams and notification are stored on a temporary data storage 8 located in the data management device until they are processed. Said temporary data storage is a mixture of RAM data storage and a harddrive. Herein, the RAM data storage is preferably utilized for high priority data streams and notifications. Normal data streams are typically stored on the hard drive.

The task assignment process assigns the jobs of the queue to available processing units 4a, 4b, 4c, 4d to provide these data containers and message containers. It has to be noted that the processing units 4a, 4b, 4c, 4d in this context refer to the single processing units available resulting in a single CPU typically providing multiple processing units 4a, 4b, 4c, 4d. The four processing units 4a, 4b, 4c, 4d shown are only deemed to be examples. The real system as shown in figure 1 provides more than 16 processing units 4a, 4b, 4c, 4d being able to execute processes in parallel. Herein, the available processing units 4a, 4b, 4c, 4d are divided into normally utilized processing units and two emergency processing units 4a, 4b, 4c, 4d. These emergency processing units 4a, 4b, 4c, 4d are available for immediate creation of data containers and/or message containers. In case of the example as shown in figure 1 only short-term processes or processes being able to be cancelled without problem are assigned to the corresponding processing units 4a, 4b, 4c, 4d. This allows to keep them available in case a high importance task occurs like an alert regarding a problem of the gas turbine.

The data containers and message containers created are then send to a data storage to be stored. The data storage is a local data storage being located in the industrial power plant containing the gas turbines. However, the system is adapted to enable a remote access of said data.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of collecting and processing data streams and notifications of at least one continuous flow engine and/or data streams and notifications of a battery-based power storage facility utilizing a task division process and a task assigning process utilizing at least one processing unit (4a, 4b, 4c, 4d),
wherein the data streams contain continuous data related to the at least one continuous flow engine and/or data streams of a battery-based power storage facility,
wherein the notifications contain event dependent data like alerts and state related data,
wherein the task division process creates jobs regarding the generation of data containers to provide data packages of the data streams and jobs regarding the creation of message containers to provide data packages of the notifications, wherein the jobs are stored as queue (3),
wherein the task assignment process assigns the jobs of the queue (3) to available processing unit (4a, 4b, 4c, 4d)s to provide the data containers and message containers.

2. Method according to any of the aforementioned claims,
wherein the task division process utilizes an http/2 based communication protocol to communicate with a processing unit (4a, 4b, 4c, 4d) executing the creation of the data containers and/or message containers.

3. Method according to any of the aforementioned claims,
wherein the jobs referring to notifications contain a priority indicator,
wherein the priority indicator is selected based on the relevance of the notification,
wherein the priority indicator influences the placement of the job in the queue (3).

4. Method according to any of the aforementioned claims,
wherein the data streams contain rotating speed, performance or temperature data related to the continuous flow engine.

5. Method according to any of the aforementioned claims,
wherein the continuous flow engine is a gas turbine, a steam turbine, a combined cycle power device.

6. Method according to any of the aforementioned claims,
wherein the task division process creates specific data containers and/or message containers in case a specific event is triggered or a specific request is received.

7. Method according to any of the aforementioned claims,
wherein the number of processing units (4a, 4b, 4c, 4d) assigned to the jobs is adapted based on the situation.

8. Method according to any of the aforementioned claims,
wherein the data management device (1) is adapted to reassign processing unit (4a, 4b, 4c, 4d) not processing the jobs from different tasks to processing the job.

9. Method according to any of the aforementioned claims,
wherein the task assignment process defines at least one processing unit (4a, 4b, 4c, 4d) being available for immediate data container and/or message container creation, more preferred message container creation.

10. Data management device (1) containing a processing unit (4a, 4b, 4c, 4d) and at least one data storage (5), wherein the data management device (1) is adapted to be utilized in a method according to any of claims 1 to 9,
wherein the division processing unit (4a, 4b, 4c, 4d) is adapted to execute the task division process,
wherein the data storage (5) is adapted to store a communication protocol.

11. Data management device (1) according to claim 10, wherein the data management device (1) contains an assignment processing unit,
wherein the dispatcher processing unit is adapted to execute the task assignment process.

12. Data management device (1) according to any of claims 10 to 11, wherein the data storage (5) stores a http/2 based communication protocol.

13. System containing a data management device (1) according to any of claims 10 to 12 and a queue data storage,
wherein the queue data storage is a data storage adapted to store the queue and
wherein the queue data storage is adapted to provide the jobs of the queue (3) to a task assignment process.

14. System according to claim 13, wherein system contains a queue processing unit, wherein the queue processing unit is a processing unit adapted to review the jobs of the queue (3) and adapt the order of the queue (3).

15. Computer program product, tangibly embodied in a machine-readable storage medium, including instructions operable to cause a computing entity to execute a method according to any of claims 1 to 9.
